# EUROPÄISCHE PATENTANMELDUNG

(11) **EP 1 191 314 A1**
(43) Veröffentlichungstag der Anmeldung: **27.03.2002**
(21) Anmeldenummer: 00120898.2
(22) Anmeldetag: 26.09.2000
(51) Int. Cl.: G01F 23/04, F01M 11/12

(54) **Vorrichtung zur sauberen Ölstandskontrolle**

(71) Anmelder: redi-Control Dieter Reitmeyer GmbH & Co.KG, 40764 Langenfel (DE)
(72) Erfinder: Reitmeyer, Dieter, 40764 Langenfeld (DE)

(57) **Zusammenfassung**

Vorrichtung zur sauberen Ölstandskontrolle bei Motoren, die durch auf unter Druck stehenden auf Trägern (3) montierte Wischer beim Herausziehen des Ölmessstabs aus dem in den Motorinnenraum führenden Einführungsrohr das auf dem Stab haftende Motorenöl auf seiner ganzen Länge zuverlassig abwischt, so dass es in den Motorraum zurückläuft und der Messtab für die Durchführung der Messung ganz sauber ist, wobei der Druck vorzugsweise durch eine hinter einem der Wischerträger angebrachte Metallfeder (2) erzeugt wird, dieser Druck aber über an den Trägern seitlich angebrachte halbrunde ineinandergreifende Zahnräder (1,A-A) auf den gegenüberliegenden Wischerträger übertraggen wird.

## Beschreibung

Die Erfindung betrifft eine Vorrichtung, mittels derer vor der Ölstandskontrolle von Motoren durch Herausziehen des Ölmessstabes aus dem Motorinnenraum entlang zweier in einem auf die Aufnahmeröhre für den Ölmessstab aufgesteckten Gehäuse einander gegenüber auf Trägern angebrachten unter konstantem Druck gegen die Flachseiten des Messstabs gedrückten Wischflächen das am Ölmessstab anhaftende Öl abgewischt wird, wonach durch eine gesonderte Vorrichtung die Wischflächen auf ihren Trägern in Gegenrichtung weggezogen werden, damit der saubere Messstab zur Durchführung der Messung durch das damit offene Aufnahmerohr in den Motorinnnenraum hineingeschoben und herausgezogen werden kann und wonach nach abschließender Wiedereinführung des Messstabes in das Aufnahmerohr der Gegenzug wieder weggenommen wird und die Wischer wieder wie zu Beginn des Vorgangs am Messtab anliegen.

Herkömmlich geschieht bei der Messung des Ölstands bei Motoren folgendes:
Um den Ölstand zu messen, führt man über einen auf dem Motorraum aufsitzenden Tubus einen Messstab bis zum Grund des Motorinnenraumes ein. Aufgrund seiner Viskosität bleibt beim Herausziehen des Messtabes auf seiner ganzen Fläche, insbesondere an den für die eigentliche Messung gesondert dazu ausgebildeten zwei kleinen Verdickungen an seinem unteren Ende, Öl haften. War der Motor, wie bei der Kontrolle an der Tankstelle üblich, noch bis kurz vor der Messung in Betrieb, befindet sich das im Motorraum bewegte Öl auf der ganzen Länge des rd. 1 m langen Meßstabes.
War der Motor zuvor in Ruhe, wird der Messtab nach dem Herausziehen nur in dem Bereich mit Öl benetzt sein, wo er sich in der still liegenden Ölflüssigkeit befunden hat. Man kann dann schon nach dem ersten Herausziehen den Ölfüllstand erkennen und nachfüllen, wenn die Füllhöhe unter dem auf dem Messtab eingezeicheten kritischen Bereich liegt. Da man nur selten sicher sein kann, daß ein Motor lange genug geruht hat, um eine einwandfreie Messung zu gewährleisten, empfehlen alle Kraftfahrzeughersteller, generell vor jeder Messung den Messtab sorgfältig von etwa anhaftendem Öl zu befreien.
Gewichtsmessungen haben ergeben, dass am Ölmessstab nach normalem Lauf des Motors bis zu 80 g Öl haften bleiben, die nach außen getragen werden. Die Fahrzeughersteller schlagen vor, generell den Messvorgang einmal zu wiederholen, um eine sichere Messung zu erhalten. Ferner schlagen sie vor, den Stand des Motorenöls möglichst nach jedem zweiten Tanken zu prüfen. Hält sich jeder daran, bedeutet dies, dass jeder Kraftfahrer im Monat bei der Messung des Ölstandes seines Fahrzeuges an die 400 g Öl vergeudet. Tatsächlich unterbleibt manche gebotene Kontrolle. Bei freier Schätzung sind es in Europa bei ca. 150 Millionen Automobilen hochgerechnet aber doch an die 20 bis 30 Millionen Liter Motorenöl, die so verloren gehen.
Üblicherweise wird das Öl mit einem Lappen oder Papier abgewischt. Geschieht die Ölkontrolle an der Tankstelle, wird Wegwerfpapier verwendet, das entsorgt wird. Außerhalb der Tankstellen hängt es aber vom Zufall ab, wie das Öl abgewischt wird und wo es landet. Häufig wird altes Zeitungspapier verwendet, das nicht speziell entsorgt wird.
Auch die Öllappen, an die sich viele Autofahrer gewöhnt haben, werden meist in den normalen Müll gegeben. Man kann also davon ausgehen, daß Monat für Monat viele Millionen Liter Motorenöl in der Natur verschwinden, die sich abbaubar sind und durch Eintritt in den Wasserhaushalt die Umwelt dauerhaft geschädigt wird. Schwerpunkte für diese Umweltbelastung sind öffentliche Rastplätze und private Abstellflächen und Garagen.

Die vorliegende Erfindung ist geeignet, diesen Übelstand abzustellen, weil sie gewährleistet, dass zum Zwecke der Messung des Ölstandes von Motoren absolut kein Öl den Motorinnenraum verlässt.

Die Erfindung ermöglicht ferner eine saubere Ölstandskontrolle ohne die Gefahr, dass die Fahrer sich Hände und Kleidung dabei mit Öl verschmutzen.

Außerdem wird die Gesamtdauer des Messvorgangs von bisher etwa zwei bis vier Minuten (einschließvorbereitender Beschaffung eines Abwischlappens oder -papiers und deren Beseitigung) auf etwa 10 bis 20 Sekunden verkürzt.

Dadurch, dass der Vorgang von der Gefahr der Verschmutzung des Kraftfahrers mit Öl befreit und dadurch dass er wesentlich abgekürzt wird, ist damit zu rechnen, dass die Kraftfahrer nach der Ausrüstung ihrer Fahrzeuge mit der erfindungsgemäßen Vorrichtung nicht wie bisher oft die notwendigen Kontrollen unterlassen. Viele Motorschäden sind allein auf die zu geringe Ölmenge im Motorinnenraum zurückzuführen. Wenn die Kraftfahrer den Ölstand der Motoren regelmäßig kontrollieren, füllen sie bei Abfall des Ölstandes immer rechtzeitig nach und diese Schäden werden verhindert.

Diese vielfältigen Vorteile werden mit Hilfe der einfachen und sicherlich in der Massenproduktion sehr billigen erfindungsgemäßen Vorrichtung erzielt.

Der erfindungsgemässe Gegenstand ist neuartig durch seine neue Aufgabenstellung und zugleich durch die eigenständige Lösung mittels einer Vorrichtung, für deren Funktion mehrere sorgfältig aufeinander abgestimmte Arbeitsschritte zu erkennen und technisch zu lösen waren.

Erster Schritt ist die sorgfältige Reinigung des Ölmessstabes beim Herausziehen des Stabes mit dem Effekt, dass alles Öl vom Stab abgewischt wird und wieder in den Motorinnenraum zurückläuft.
Die Vorrichtung bildet den scheinbar einfachen Vorgang des Abwischens eines Stabes von Hand mit einem Lappen nach, bei dem der Stab zwischen zwei Wischflächen des Lappens hindurchgezogen wird, die mit der Muskelkraft der Hand elastisch aber konstant gegen den Schaft des Stabes gedrückt werden. Während der Messtab auf seiner ganzen Länge nur etwa 2 mm dick ist, sind die beiden Verdickungen im eigentlichen Messbereich am Ende des Stabes, die die Messzone begrenzen, bei einer Länge von jeweils 10 mm etwa 5 mm dick. Dort besonders bedarf es eines kräftigen, aber elastischen Drucks, um zu gewährleisten, dass die Wischflächen beim schnellen Herausziehen des Stabes stets an ihm anliegen und gerade dort zuverlässig alles Öl entfernen. Dieser Effekt wird erzeugt durch eine starke hinter einer der beiden Wischflächen (3) im Gehäuse (4) fest verankerte Metallfeder (2).

Damit die Kraft auf beiden Seiten des Stabes zugleich wirkt, wird sie über zwei auf jeweils seitlich an den Trägern der Wischflächen befindlichen halbrunden Zahnräddern (A-A), die ineinander greifen, von einem Träger der Wischfläche auf den anderen übertragen.

Das saubere Abwischen des Messtabes ist aber nur die Vorbereitung für den eigentlichen Messvorgang, für den das Einführungsrohr so geöffnet werden muss, dass der Messstab dann keine Berührung mit den Wischflächen mehr hat. Der erfindungsgemäße Gegenstand enthält daher ferner eine entsprechende Vorrichtung für das Zurückziehen der Wischflächen und die vollständige Öffnung des Einführungsrohres, um das freie Hineinstoßen und Herausziehen des Messstabs zu ermöglichen.

Um das Aufnahmerohr nach dem Herausziehen des Messstabes öffnen zu können, sieht der Erfindungsgegenstand vor, dass die Wischfläche, hinter der keine Feder angebracht ist, durch eine besondere Vorrichtung zurückgezogen wird.

Der Rückholmechanismus kann ein simpler Draht sein, der am Träger des nicht unter direktem Federdruck stehenden Wischers befestigt und durch das Gehäuse der Vorrichtung (4) seitlich herausgeführt wird. Nach Zurückziehen des Trägers kann ein solcher Draht außen am Gehäuse arretiert werden, etwa indem er in eine vorbereitete Kerbe eingelassen wird. Weit besser ist aber das Zurückholen des Trägers auf Knopfdruck, indem man die Kraft der 12 Volt-Fahrzeugbatterie nutzt. Dies kann so geschehen, daß ein im Gelenk am Gehäuse (4) befestigter stabiler Winkel (7) mit einem Schenkel über einen Draht am Träger befestigt wird und mit dem Ende des anderen an einem magnetisierbaren Metallkern, der in einem kleinen am Boden des Gehäuses befestigten Elektromagneten (8) sitzt.
Wird der auf dem Gehäuse befindliche Einschaltknopf (6) betätigt, fließt Strom durch die Spule des Elektromagneten und zieht den magnetisierten Kern hinein. Über die Hebelwirkung wird dann der Träger des damit verbundenen Wischers zurückgezogen. Durch die Kraftübertragung durch den Zahnradmechanismus (A-A) wirkt die Rückholkraft auch auf den unter Federdruck stehenden zweiten Wischerträger und der Tubus ist ganz frei.

Das Gehäuse (4) und die Träger der Wischerflächen (3) können vorzugsweise als Kunststoffspritzgießteile hergestellt werden. Die Wischer selbst (kreuzschraffiert dargestellt) müssen aus einem sehr haltbaren Gewebe bestehen, etwa aus reißfestem Nylon. Das Gewebe darf auf keinen Fall beim Hin- und Herbewegen des Messstabes nicht zerrissen werden, damit nicht Teile davon in den Motorinnenraum gelangen können.
Um nicht zuviel Druck auf die Kraftübertragung durch die Zahnräder (A-A) zu erzeugen, kann deren Funktion doppelt eingesetzt werden, etwa indem man die Träger, in die die Wischerflächen mittig eingeklebt sind, jeweils außen mit je einem Halbrund, auf dem sich die ineinandergreifenden Zähne befinden, versieht. Die Kraft zum Schließen der beiden Wischerflächen und auch die Gegenkraft zum Auseinanderhalten der Flächen wird dadurch auf zwei Zahnradmechanismen verteilt.

Nachdem zunächst der Federdruck auf beide Wischerblätter den Ölmesstab in der Ausgangsposition für die nächste Reinigung des Stabes für die Ölstandskontrolle mit dem sauberen Stab geschaffen hat und nachdem die der Federkraft entgegenwirkende Vorrichtung das Aufnahmerohr für die Durchführung der Messung offen gehalten hat, muss nach der Messung die Vorrichtung wieder in die Ausgangsposition für die nächste Kontrolle gebracht werwerden. War die Federkraft durch einen einfachen mechanischen Seilzug aufgehoben und die Wischflä-chen so auseinandergehalten worden, muss der Seilzug durch Lösen des Hebels aufgehoben werden. Vergisst der Fahrer dies, ist das allerdings ohne große Bedeutung, da er dies vor der nächsten Messung nachholen kann. Zwischenzeitlich kann kein Nachteil für den Motor eintreten, weil die Vorrichtung mit dem einliegenden Ölmessstab mit oben liegendem Griff die Aufnahmeröhre ohnehin abschließt. Anders ist aber die Lage beim Einsatz des kleinen Elektromagneten. Damit nicht nach der Durchführung der Messung dauerhaft Strom von der Batterie abgezogen wird, muss entweder der Knopf (6) des Ein-/Aus-Schalters betätigt werden oder die Ausschaltung muss über einen einfachen eingebauten handelsüblichen Zeitschalter erfolgen, der beispielsweise immer dann die Stromzufuhr unterbindet, wenn er länger als fünf oder zehn Minuten lang eingeschaltet war. Zur Kontrolle dafür, dass Strom fließt, ist mit dem Schalter eine Diode (5) verbunden, die gut sichtbar oben auf dem Gehäuse angebracht ist.

Die ganze Vorrichtung, die einfach auf das Ende des in den Motorraum führenden Metalltubus aufgesteckt und dort mit einer Metallschelle befestigt wird, hat Ausmaße von ca. 10 x 10 x 10 cm. Eine so kleine Vorrichtung passt selbst in vollgepackte Motorräume. Der erfindungsgemäße Gegenstand ist auch beim Einsatz in Fahrzeugen sinnvoll, die mit elektronischen Ölstandsmessern versehen sind, weil auch die Hersteller, die diese teuren Sensoren einbauen, nicht auf die einfache, sichere Messung über den Ölmessstab verzichten wollen. Die erfindungsgemäße Vorrichtung kann auch als Nachrüstteil in alte Fahrzeugen eingebaut werden. Dabei muß nur das Aufnahmerohr für den Ölmessstab in genau der Länge abgeschnitten werden, mit der die erfindungsgemäße Vorrichtung über den bisherigen Rand des Rohres hinausragt. Dies sichert, dass der Ölmessstab wie zuvor mit der richtigen Tiefe in den Motorinnenraum eindringt.

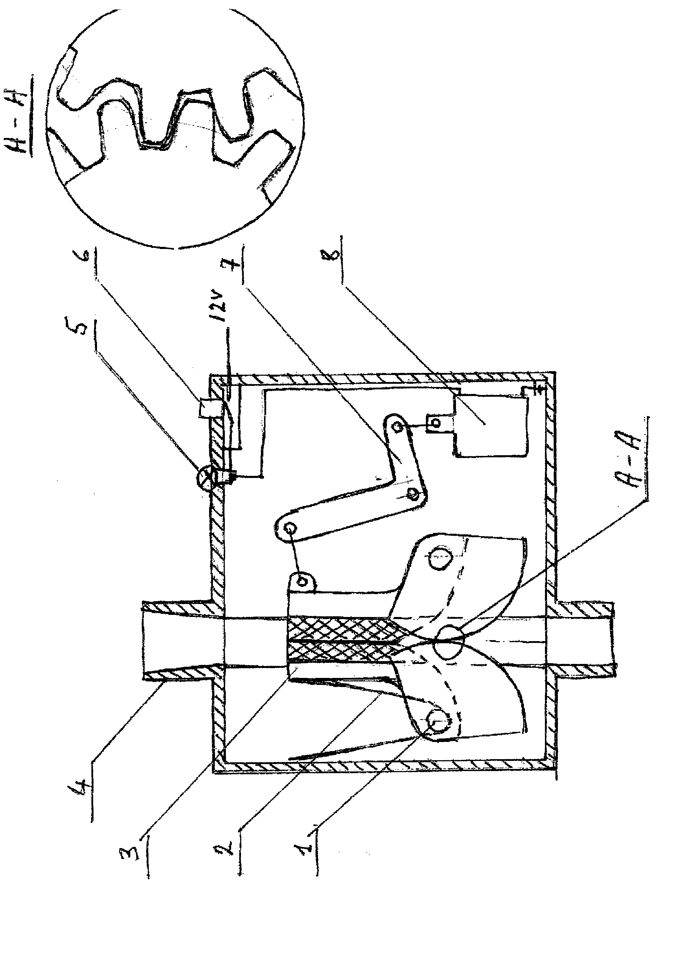

## Patentansprüche

1. Vorrichtung zur Reinigung des Ölmessstabes bei Motoren, **dadurch gekennzeichnet, dass** außerhalb des Messvorgangs und beim Herausziehen des Messstabes zur Vorbereitung der Messung zwei einander gegenüberstehende Wischerflächen unter konstantem Druck gegen den Stab anlehnen, so dass er auf der ganzen Länge und besonders im Bereich der Verdickungen an seinem Ende und der Messzone zwischen ihnen beim schnellen Herausziehen des Stabes aus der in den Motorinnenraum führenden Metallröhre zuverlässig vom anhaftenden Öl befreit wird.

2. Vorrichtung zur Reinigung des Ölmesstabes bei Motoren, **dadurch gekennzeichnet, dass** nach dem Herausziehen des Messstabes die Wischerflächen gegen bestehenden Druck auf diese auseinandergehalten werden, um ein freies Einführen und Hinausziehen des Messtabes zu ermöglichen.

3. Vorrichtung zur Reinigung des Ölmessstabes bei Motoren nach Anspruch 1, **dadurch gekennzeichnet, dass** hinter einem der beiden Träger der gegenüberliegenden Wischerflächen eine Metallfeder angebracht wird, die die Wischerfläche nach innen zur Rohrmitte hin und gegen eine der beiden flachen Seiten des Messstabes drückt.

4. Vorrichtung zum Reinigen des Ölmessstabes bei Motoren nach Anspruch 1. und 2., **dadurch gekennzeichnet,** dasss die Träger, auf die die Wischer aufgeklebt sind, außen jeweils auf einer halbrunden Ausbuchtung mit Zähnen versehen sind, wobei die Träger so gegen einander im Gelenk beweglich angebracht sind, dass ihre Zähne ineinandergreifen und darüber jede Kraft auf einen der beiden Träger auf den anderen Träger übertragen wird.

5. Vorrichtung zum Reinigen des Ölmessstabes bei Motoren nach Anspruch 2., **dadurch gekennzeichnet, dass** hinter dem Wischerträger, hinter dem keine Metallfeder befestigt ist, eine Rückholvorrichtung eingebaut ist, die diesen Träger zurückzieht und damit das Einführungsrohr für den Messvorgang öffnet.

6. Vorrichtung zum Reinigen des Ölmessstabes bei Motoren nach Anspruch 2. und 5., **dadruch gekennzeichnet,** dass hinten oben an dem nicht mit einer Metallfeder versehenen Wischerträger ein Seilzug angebracht wird, über den der Träger, der unten im Gelenk befestigt ist, mechanich nach hinten gezogen wird, wodurch das Aufnahmerohr für die Ölstandsmessung frei wird, wobei der Seilzug seitlich aus dem Gehäuse herausgeführt und in einer Kerbe im Gehäuse arretiert werden kann.

7. Vorrichtung zum Reinigen des Ölmessstabes bei Motoren nach Anspruch 2., 5. und 6. **dadurch gekennzeichnet, dass** der Seilzug nicht mechanisch betätigt wird, vielmehr ein von der Fahrzeugbatterie gespeister Elektromotor nach dem durch Betätigung des Ein-/Aus-Schalters auf dem Gehäuise der Vorrichtung einen magnetisierbaren Metallkern na sich zieht, wodurch ein mit ihm verbundener im Gelenk am Gehäuse befestigter Winkel den am Ende des anderen Schenkels befindlichen Seilzug betätigt, wodurch der Träger des Wischers nach hinten gezogen wird.

8. Vorrichtung zum Reinigen des Ölmessstabs bei Motoren gemäß Anspruch 2., 5., 6. und 7., **dadurch gekennzeichnet, dass** der Ein-/Ausschalter zur Betätigung des Elektromagneten gemäß Amspruch 7. mit einem Zeitschalter versehen ist, der jeweils nach einigen Minuten Betriebsdauer den Strom wieder abschaltet.

9. Vorrichtung zum Reinigen des Ölmessstabes bei Motoren gemäß Anspruch 2.,5.,6.,7. und 8., **dadurch gekennzeichnet, dass** in den Leitungsweg vom Ein-/ Ausschalter gemäß Anspruch 7. eine oben auf dem Gehäuse angebrachte Diode eingebunden wird, die leuchtet, wenn der Elektromagnet betätigt ist.
